# EUROPÄISCHE PATENTANMELDUNG

(11) **EP 1 455 509 A2**
(43) Veröffentlichungstag der Anmeldung: **08.09.2004**
(21) Anmeldenummer: 04450041.1
(22) Anmeldetag: 26.02.2004
(51) Int. Cl.: H04M 3/42

(54) **Verfahren und Anordnung zur Sprachaufzeichnung**

(30) Priorität: 03.03.2003 AT 3072003
(71) Anmelder: FREQUENTIS GmbH, 1120 Wien (AT)
(72) Erfinder: Mattanovich, Hermann, Dipl.-Ing., 1070 Wien (AT)
(74) Vertreter: Jellinek, Gerhard (AT)

(57) **Zusammenfassung**

Die Erfindung betrifft ein Verfahren zur Sprachaufzeichnung, insbesondere zur Aufzeichnung von Gesprächen bzw. von insbesondere codierten bzw. komprimierten Sprachsignalen, die nach dem Aufbau einer Verbindung zwischen einem Sender und einem Empfänger in aufeinanderfolgenden Rahmen übertragen werden, dabei jedoch nur einen Teilbereich der jeweiligen Rahmen belegen. Erfindungsgemäß ist vorgesehen, dass zur verbesserten Rekonstruktion der geführten Gespräche die übertragenen Sprachsignale und die damit zusammenhängenden gesprächsrelevanten Daten und Informationen, insbesondere die für den Gesprächsaufbau relevanten Daten, zusammengeführt werden, wobei die gesprächsrelevanten Daten und Informationen in die jeweiligen von den Sprachsignalen nicht belegten Bereiche der Rahmen aufgegeben und die Sprachsignale und die gesprächsrelevanten Daten im Sender und/oder Empfänger gemeinsam mit einem bzw. mit demselben Datenrecorder (5) aufgezeichnet bzw. abgespeichert werden.

## Beschreibung

Die Erfindung betrifft ein Verfahren zur Sprachaufzeichnung gemäß dem Oberbegriff des Patentanspruches 1. Des weiteren betrifft die Erfindung eine Anordnung gemäß dem Oberbegriff des Patentanspruches 4.

Die Aufzeichnung von Gesprächen ist in vielen Bereichen erforderlich, insbesondere in Bereichen, in denen der Inhalt derartiger Gespräche für die Abwicklung von Tätigkeiten von Bedeutung ist, z.B. bei der Flugsicherung.

Derzeit gibt es allerdings keine standardisierten Schnittstellen für die Aufzeichnung von Gesprächen bzw. für die mit den Gesprächen auftretenden Signalisierungsdaten bzw. für die bei diesen Gesprächen anfallenden gesprächsrelevanten Daten, die zum Aufbau der Verbindung, der Führung des Gespräches und zum Abbau der Verbindung eingesetzt werden.

Erfindungsgemäß ist ein Verfahren der eingangs genannten Art mit den im Kennzeichen des Anspruches 1 angeführten Merkmalen charakterisiert. Eine erfindungsgemäße Anordnung, insbesondere zur Durchführung des genannten Verfahrens, ist mit den im Kennzeichen des Patentanspruches 4 angeführten Merkmalen charakterisiert.

Mit der erfindungsgemäßen Vorgangsweise ist einfach und wirtschaftlich eine Aufzeichnung der Gespräche bzw. eine Sprachaufzeichnung und dazu eine Aufzeichnung der gesprächsrelevanten Daten vorzunehmen. Jeder aufgezeichnete Rahmen enthält alle Informationen, die für das Wiederauffinden und das richtige Einordnen des jeweiligen Rahmens bei der Wiedergabe eines Gespräches notwendig bzw. für die Begleitumstände bzw. Art und Weise seiner Übertragung wesentlich sind. Interaktionen zwischen den aufgezeichneten Sprachkanälen und den aufgezeichneten gesprächsrelevanten Daten sind für die Wiedergabe eines Gespräches nicht erforderlich, da in jedem Rahmen alle gesprächsrelevanten Daten enthalten sind. Bei der Wiedergabe eines aufgezeichneten Gespräches ist es lediglich erforderlich, die den aufgezeichneten Sprachdaten zugeordneten gesprächsrelevanten Daten wiederzugeben bzw. zur Anzeige zu bringen, so dass neben dem Gespräch auch die begleitenden gesprächsrelevanten Daten, insbesondere die Daten beim Gesprächsaufbau und/oder Gesprächsabbau und/oder die Daten, die während des Gespräches für das Gespräch Bedeutung hatten, rekonstruiert werden können.

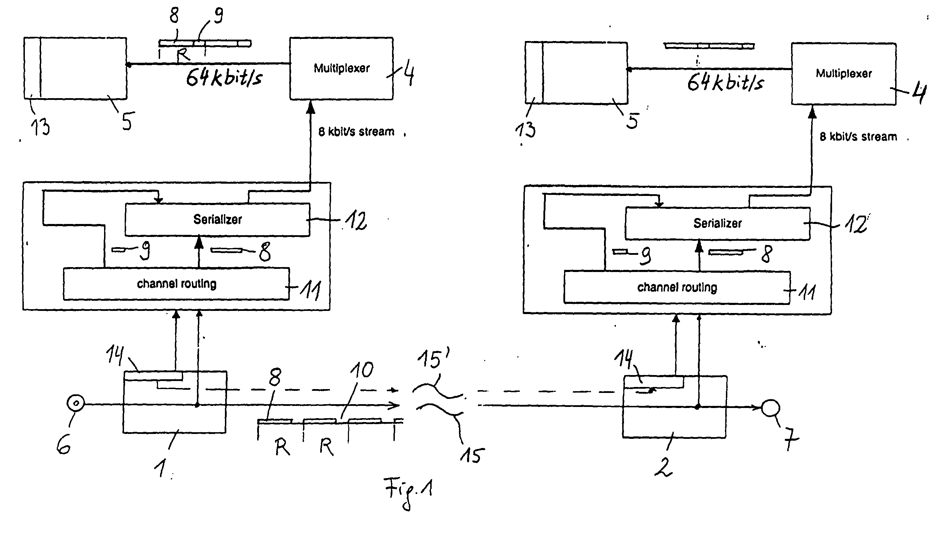

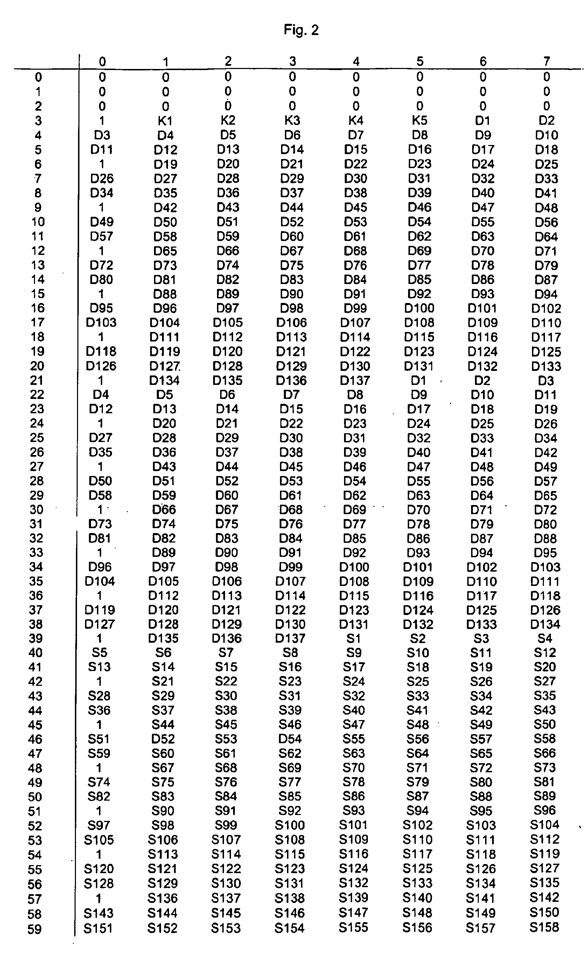

Im folgenden wird die Erfindung anhand der Zeichnung beispielsweise näher erläutert. Fig.1 zeigt ein Schema einer erfindungsgemäßen Anordnung. Fig.2 zeigt einen Rahmen R belegt mit Sprachdaten und gesprächsrelevanten Daten.

Gemäß Fig.1 werden einem Sender 1 mittels eines Mikrofons 6 oder entsprechend anderer Einrichtungen Gesprächsdaten aufgegeben, die über ein Übertragungsmedium 15 einem Empfänger 2 zugeleitet werden und dort mittels eines Lautsprechers 7 oder anderer entsprechender Einrichtungen wiedergegeben bzw. dargestellt werden können.

Der Sender 1 generiert dazu aufeinanderfolgende Rahmen R, die zum Teil mit Sprachdaten 8 in Paketform belegt werden. Diese Rahmen werden dem Empfänger 2 übermittelt. Für die Übertragung bietet sich aufgrund vorhandener Bauelemente ein serieller 8 kbit/s Datenstrom an. Die insbesondere codierten Sprachdaten können dabei 274 bits in 60 ms belegen. Ein 8 kbit/s Strom hat 480 bits pro 60 ms. Mit einer notwendigen Rahmensynchronisierung können die Gesprächsdaten in einem 60 ms dauernden burst mit 322 bits übertragen werden, so dass in jedem Rahmen bzw. in jedem 60 ms-Paket 158 bits ungenutzt verbleiben. Diese ungenutzten bits werden nunmehr verwendet, um die geführten Gespräche bzw. die Sprachaufzeichnung einfacher und besser rekonstruierbar zu gestalten.

Im Sender 1 werden die abgesendeten Rahmen R und die im Zuge des Gesprächsaufbaus und der Gesprächsführung anfallenden gesprächsrelevanten Daten und Informationen von einer Einheit 14 erstellt bzw. bereit gestellt und einer Routingeinheit 11 übermittelt, welche die Rahmen R mit den Sprachdatenpaketen 8 und die Pakete mit den gesprächsrelevanten Daten 9 einer Verknüpfungseinheit 12 übermittelt, welche die gesprächsrelevanten Daten 9 in die freien Bereiche 10 der Rahmen R einsetzt. Die damit aufgefüllten Rahmen R werden einem Datenrecorder 5 übermittelt und dort abgespeichert.

Die gesprächsrelevanten Daten, die für den Aufbau eines Gespräches gewählt bzw. erforderlich und/oder fix vorgegeben sind, sind in den Einheiten 14 im Sender 1 bzw. im Empfänger 2 gespeichert enthalten oder von der jeweiligen Bedienungsperson erstellbar bzw. wählbar. Diese Daten werden, soweit sie vom Sender 1 dem Empfänger 2 mitgeteilt werden sollen, über ein eigenes Übertragungsmedium 15', d.h. getrennt von den die Sprachdaten enthaltenen Rahmen R, übertragen. Im Empfänger 2 lösen die übertragenen gesprächsrelevanten Daten entsprechende Reaktionen beim Verbindungsaufbau bzw. während des Gespräches aus; diese im Empfänger 2 anfallenden bzw. dort generierten gesprächsrelevanten Daten 9 werden gemeinsam mit den einlangenden Sprachdaten 8 vom Datenrecorder 5 des Empfängers 2 in serieller Form in den jeweiligen Rahmen R aufgezeichnet.

Die die Verknüpfungseinheit 12 in Form eines 8 kbit/s Datenstrom verlassenden Daten werden einem Multiplexer 4 zugeführt, der diese Daten in Form eines 64 kbit/s Datenstroms dem Datenrecorder 5 zuführt.

Diese Vorgangsweise ermöglicht es, mit derselben Verknüpfungseinheit sowie mit demselben Datenrecorder auch alle Aufzeichnungen von einlangenden Gesprächen vornehmen, sofern der Sender auch als Empfänger fungiert.

Nach einer Verbindungsaufnahme des Senders 1 wird im Empfänger 2 festgestellt, dass ein Anruf vorliegt. Entsprechend erfolgt ein Aufbau des Gespräches bzw. ein Erkennen der Gesprächsvorgaben. Dieser Gesprächsaufbau und die damit verbundenen bzw. anfallenden gesprächsrelevanten Daten im Empfänger 2 werden ebenso wie die einlangenden Sprachsignale und einlangende gesprächsrelevante Daten über die Routingeinheit 11 der Verknüpfungseinheit 12 des Empfängers zugeführt, welche die einlangenden Sprachdaten 8 und die anfallenden gesprächsrelevanten Daten verknüpft bzw. die gesprächsrelevanten Daten 9 in die freien Bereiche 10 der einlangenden Rahmen R eingibt. Die Abspeicherung erfolgt in dem Datenrecorder 5.

Die Aufzeichnung bzw. das Einlesen der gesprächsrelevanten Daten 9 in die Rahmen R erfolgt im Sender 1, beginnend mit dem Gesprächsaufbau bzw. mit der Absendung des ersten Rahmens R ab dem Zeitpunkt, zu dem beim Empfänger 2 der erste vom Sender 1 abgesendete bzw. übertragene Rahmen R einlangt. Es reicht aus, wenn bei einer Wiedergabe der aufgezeichneten Gesprächsdaten und der gesprächsrelevanten Daten die aufgezeichneten Sprachdaten wiedergefunden und wiedergegeben werden können. Im Zuge dieser Wiedergabe können die in den jeweiligen Bereichen 10 der wiedergegebenen Rahmen R enthaltenen gesprächsrelevanten Daten erkannt bzw. wiedergegeben werden. Dem jeweiligen Datenrecorder 5 sind Wiedergabeeinrichtungen 13 zugeordnet, mit denen die Gesprächsdaten wiedergegeben bzw. rekonstruiert werden können, gemeinsam mit den gesprächsrelevanten Daten, die nach entsprechender Decodierung zur Anzeige gebracht werden können.

Als derartige gesprächsrelevanten Daten kommen vor allem Call Type, Call Priority, Source SSI, Target SSI, External Subscriber Number usw. in Frage.

Fig.2 zeigt ein Beispiel für einen 60 ms Rahmen R in serieller Form. Die Übertragung startet mit Byte Null bit Null und endet mit Byte 59 bit 7. Insgesamt werden 480 bits in 60 ms übertragen; die notwendige Bandbreite beträgt 8000 bits pro Sekunde.

Ein derartiger 60 ms Rahmen wird mit 24 Null bits eingeleitet. Durch bit-stuffing wird im folgenden bit Strom alle 24 bit eine 1 codiert und damit eine 24 Null bit Folge innerhalb des Rahmens verhindert. Jeder Rahmen wird mit 5 Kontroll-bits (K1 - K5) versehen. Die Kontroll-bits beschreiben die Art des Rahmens und die Gültigkeit der jeweils folgenden Daten. Nach den Kontroll-bits erfolgt die Codierung der Sprachdaten (2 mal D1 - D137). Anschließend folgen 158 bits (S1 - S158), die frei sind zur Aufnahme von gesprächsrelevanten Daten. Inwieweit diese freie Bitanzahl jedes Rahmens für die Eintragung von gesprächsrelevanten Daten ausgenutzt wird, bleibt dem Anwender vorbehalten.

Diese freibleibenden 158 bits können z.B. belegt werden mit 4 bit Call Type, 4 bit Call Priority, 24 bit Source SSI, 24 bit Target SSI, 96 bit External Subscriber Number, 14 bit Call ID und 16 bit für die Bildung einer Prüfsumme.

Mit der erfindungsgemäßen Vorgangsweise erhält man eine on-line-Aufzeichnung der gesprächsrelevanten Daten, ohne irgendeinen Einfluss auf die Übertragungsgeschwindigkeit. Des Weiteren ist lediglich ein einziger Datenrecorder für die gemeinsame Aufzeichnung der Sprachdaten 8 und der gesprächsrelevanten Daten 9 erforderlich, womit der Aufbau der erfindungsgemäßen Anordnung gegenüber herkömmlichen Systemen wesentlich vereinfacht wird.

Eine Übertragung der gesprächsrelevanten Daten erfolgt auch dann, wenn keine Sprachdaten, d.h. Rahmen ohne Sprachdaten, übermittelt werden, z.B. wenn vom Sender nach Verbindungsaufbau keine Sprachdaten aufgegeben werden; in diesem Fall werden in dem Rahmen R die entsprechenden bits auf Null gesetzt.

## Patentansprüche

1. Verfahren zur Sprachaufzeichnung, insbesondere zur Aufzeichnung von Gesprächen bzw. von insbesondere codierten bzw. komprimierten Sprachsignalen, die nach dem Aufbau einer Verbindung zwischen einem Sender und einem Empfänger in aufeinanderfolgenden Rahmen übertragen werden, dabei jedoch nur einen Teilbereich der jeweiligen Rahmen belegen, **dadurch gekennzeichnet, dass** zur verbesserten Rekonstruktion der geführten Gespräche die übertragenen Sprachsignale und die damit zusammenhängenden gesprächsrelevanten Daten und Informationen, insbesondere die für den Gesprächsaufbau relevanten Daten, zusammengeführt werden, wobei die gesprächsrelevanten Daten und Informationen in die jeweiligen von den Sprachsignalen nicht belegten Bereiche der Rahmen aufgegeben und die Sprachsignale und die gesprächsrelevanten Daten im Sender und/oder Empfänger gemeinsam mit einem bzw. mit demselben Datenrecorder aufgezeichnet bzw. abgespeichert werden.

2. Verfahren nach Anspruch 1, **dadurch gekennzeichnet, dass** der freie Bereich des Rahmens mit gesprächsrelevanten Daten betreffend Call Type, Call Priority, Signalisierung, Source SSI, Target SSI, External Subscriber Number, Call ID und/oder Prüfbits-Summen od.dgl. belegt wird.

3. Verfahren nach Anspruch 1 oder 2, **dadurch gekennzeichnet, dass** für die Sprachsignalübertragung ein serieller 8 kbit/s Daten-Strom vorgesehen wird, wobei 480 bits pro 60 ms übertragen werden und einschließlich Rahmensynchronisation der Rahmen mit 322 bits mit Sprachsignalen belegt wird, so dass in jedem Rahmen 158 bits mit gesprächsrelevanten Daten belegbar sind.

4. Anordnung zur Sprachaufzeichnung, insbesondere zur Aufzeichnung von Gesprächen bzw. von insbesondere codierten bzw. komprimierten Sprachsignalen, die nach dem Aufbau einer Verbindung zwischen einem Sender und einem Empfänger in aufeinanderfolgenden Rahmen übertragen werden, dabei jedoch nur einen Teilbereich der jeweiligen Rahmen belegen, wobei zur Aufzeichnung der Sprachsignale zumindest ein Datenrecorder (5,5') vorgesehen ist, insbesondere zur Durchführung des Verfahrens nach einem der Ansprüche 1 bis 3, **dadurch gekennzeichnet, dass** die Anordnung im Sender (1) und/oder im Empfänger (2) eine Verknüpfungseinheit (12) umfasst, mit der die übertragenen Sprachsignale (8) und die gesprächsrelevanten Daten bzw. Informationen (9) zusammenführbar sind, indem die Verknüpfungseinheit (12) die von den Sprachsignalen (8) nicht belegten Bereiche der Rahmen (R) mit, insbesondere für den Gesprächsaufbau charakteristischen bzw. erforderlichen, gesprächsrelevanten Daten bzw. Informationen auffüllt und dass der Datenrecorder (5) zur gemeinsamen Aufzeichnung der einlangenden Sprachsignale (8) und der gesprächsrelevanten Daten bzw. Informationen (9) im Sender (1) und/oder im Empfänger (2) an die jeweilige Verknüpfungseinheit (12) angeschlossen ist.

5. Anordnung nach Anspruch 4, **dadurch gekennzeichnet, dass** in dem Sender (1) die zur Aufzeichnung vorgesehenen Sprachsignale (8) von den zur Übertragung vorgesehenen Sprachsignalen abgeleitet und die zur Aufzeichnung vorgesehenen gesprächsrelevanten Daten (9) von den im Sender (1) zum Aufbau und zur Abwicklung des jeweiligen Gespräches erstellten bzw. anfallenden Daten gebildet bzw. von diesen Daten abgeleitet sind und dass in dem Empfänger (2) die zur Aufzeichnung vorgesehenen Sprachsignale (8) von den einlangenden Sprachsignalen abgeleitet sind und die zur Aufzeichnung vorgesehenen gesprächsrelevanten Daten (9) von den zum Aufbau des Empfangs der übertragenen Sprachsignale und zur Abwicklung des Gespräches im Empfänger (2') erstellten bzw. anfallenden Daten abgeleitet sind.

6. Anordnung nach Anspruch 4 oder 5, **dadurch gekennzeichnet, dass** der Verknüpfungseinheit (12) ein Multiplexer (4) nachgeschaltet ist, insbesondere zur Umwandlung von 8 parallelen 8 kbit/s Kanälen in einen 64 kbit/s Datenstrom, der dem Datenrecorder (5) zugeführt ist.
